# EUROPÄISCHE PATENTSCHRIFT

(11) **EP 1 084 930 B1**
(45) Veröffentlichungstag und Bekanntmachung des Hinweises auf die Patenterteilung: **21.12.2005**
(21) Anmeldenummer: 00104322.3
(22) Anmeldetag: 02.03.2000
(51) Int. Cl.: B62B 3/10, B62B 3/18

(54) **Stapelbarer Transportwagen zum Transport von hochkant abzustellenden Platten**
Nestable transport trolley for the transport of boards to be placed on end
Chariot de transport emboîtable pour le transport de plateaux posés verticalement

(30) Priorität: 17.09.1999 DE 29916255 U
(43) Veröffentlichungstag der Anmeldung: 21.03.2001
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- DE-A- 1 605 459
- DE-U- 29 712 487
- DE-U- 29 910 923
- US-A- 2 466 149

## Beschreibung

Die Erfindung betrifft einen stapelbaren Transportwagen zum Transport von hochkant abzustellenden Platten, mit einem Fahrgestell, das einen trapezförmigen Grundriss aufweist, dessen längere hintere Seite fehlt, mit Auflagestellen für die abzustellenden Platten und mit Anschlägen, um die Platten in ihrer Position zu halten, wobei zumindest ein Teil der Anschläge durch einen im vorderen Bereich des Transportwagens befindlichen vorderen Stützbügel und durch einen im hinteren Bereich des Transportwagens vorgesehenen hinteren Stützbügel gebildet ist, wobei ferner der vordere Stützbügel schmäler und niedriger gestaltet ist als der hintere Stützbügel und wobei die Auflagestellen und die Anschläge in einem spitzen Winkel zur Längsachse des Transportwagens angeordnet sind.

Transportwagen dieser Art finden Verwendung in Bau- und Heimwerkermärkten. Diese Wagen sind so gestaltet, dass sie in gleiche Wagen platzsparend einschiebbar sind. Im Prospekt Nr. LD 04/99 der Anmelderin ist z.B. ein derartiger Transportwagen mit der Typenbezeichnung T24 abgebildet und beschrieben. Um mit solchen Transportwagen größere Platten hochkant befördern zu können, befinden sich an einer der beiden Längsseiten der Transportwagen vorne und hinten je eine Auflagestelle wobei Anschläge vorgesehen sind, die zum seitlichen Abstützen der Platten bestimmt sind. Zu den Anschlägen zählen auch ein vorderer und ein hinterer Stützbügel, die nach oben gerichtet und je einer Auflagestelle zugeordnet sind. Von oben betrachtet sind die Auflagestellen sowie die Anschläge und die Stützbügel in einem spitzen Winkel zur Längsachse der Transportwagen angeordnet. Sie befinden sich an einer Längsseite der Transportwagen, also entweder rechts oder links der Längsachse der Transportwagen. Mit den bekannten Transportwagen lassen sich nur relativ kleine und leichte Platten transportieren, da sich die Auflagestellen an einer der beiden Längsseiten der Transportwagen befinden und deshalb die Wagen bei etwas größerer seitlich wirkenden Belastung zum Kippen neigen.

Einen weiteren gattungsgemäßen Transportwagen zeigt die DE 299 10 923 U.

Es ist Aufgabe der Erfindung, einen Transportwagen der hier vorliegenden Art so zu verbessern, dass mit diesem Wagen auch schwere Platten transportiert werden können und dass dieser Transportwagen auch weiterhin in einen gleichen Wagen eingeschoben, also platzsparend gestapelt werden kann.

Die Lösung der Aufgabe besteht darin, dass sich die Auflagestellen rechts und links der Längsachse befinden und dass beim platzsparenden Stapeln zweier Transportwagen der vordere Stützbügel des einzuschiebenden Transportwagens durch den hinteren Stützbügel des vorausbefmdlichen Transportwagen hindurchführbar ist.

Dadurch dass die Auflagestellen rechts und links der Längsachse des Transportwagens angeordnet sind, nimmt z.B. eine auf dem Transportwagen abgestellte große Platte eine Lage ein, bei der aufgrund des günstig gelegenen Gesamtschwerpunktes in vorteilhafter Weise ein Kippen des Transportwagens ausgeschlossen ist. Von oben betrachtet ist die Platte in etwa diagonal zum trapezförmigen Grundriss des Fahrgestelles des Transportwagens angeordnet.
Durch die unterschiedliche Breite und Höhe der Stützbügel ist es möglich, derartige Transportwagen platzsparend ineinanderzuschieben. Der Platzbedarf von in einer Reihe abgestellter Transportwagen ist gering, was als weiterer Vorteil zu werten ist.

Die Erfindung wird anhand eines Ausführungsbeispieles näher erläutert. Es zeigt
Fig. 1 einen Transportwagen mit darauf hochkant abgestellter Platte sowie
Fig. 2 in einer Draufsicht zwei ineinandergeschobene Transportwagen.

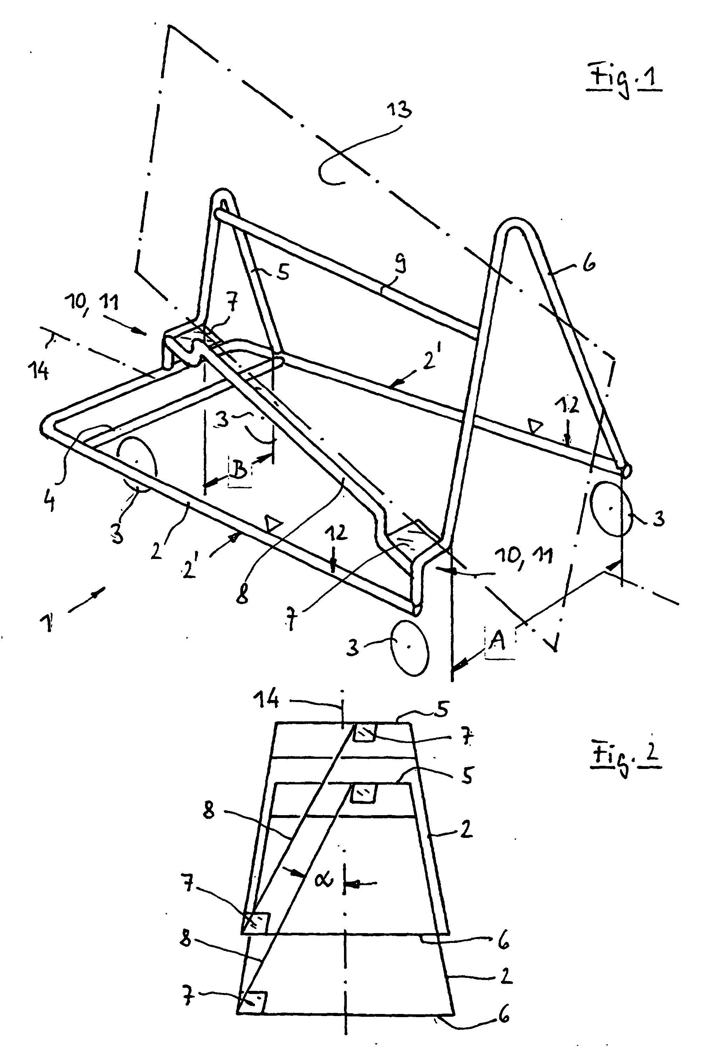

Der in Fig. 1 dargestellte Transportwagen 1 eignet sich zum Transport von hochkant abzustellenden Platten 13. Sein Fahrgestell 2 weist einen trapezförmigen Grundriss auf, dessen längere parallele Seite fehlt. An der Unterseite des Fahrgestelles 2 sind Fahrrollen 3 befestigt. Im vorderen Bereich des Fahrgestelles ist ein Quersteg 4 vorgesehen, der die beiden Längsseiten 2' des Fahrgestelles verbindet und der auch geeignet ist, die beiden vorderen Fahrrollen 3 zu tragen. Der Quersteg 4 dient zur Versteifung des Fahrgestelles 2. Im vorderen Bereich des Fahrgestelles 2 oder an dessen vorderem Ende ist seitlich und in einem Abstand zur Längsachse 14 des Transportwagens 1 angeordnet ein vorderer Stützbügel 5 vorgesehen, der in etwa eine auf den Kopf gestellte V-förmige Gestalt besitzt. Der vordere Stützbügel 5 besitzt oder trägt eine Auflagestelle 7, die ebenfalls in einem Abstand zur Längsachse 14 angeordnet ist. Im hinteren Bereich des Fahrgestelles 2 ist ein hinterer Stützbügel 6 am Fahrgestell 2 so angeordnet, dass dieser die beiden freien Enden des Fahrgestelles 2 verbindet. Der hintere Stützbügel 6 ist ebenfalls auf den Kopf gestellt V-förmig gestaltet und höher und breiter ausgebildet als der vordere Stützbügel 5, so dass beim platzsparenden Ineinanderschieben zweier gleicher Transportwagen 1 der vordere Stützbügel 5 des einzuschiebenden Transportwagens 1 durch den hinteren Stützbügel 6 des vorausbefindlichen Transportwagens 1 hindurchgeschoben werden kann. Dem hinteren Stützbügel 6 ist ebenfalls eine Auflagestelle 7 zugeordnet. An oder nahe den beiden Auflagestellen 7 verbindet ein Anschlag 8 den vorderen und den hinteren Stützbügel 5, 6. Der Anschlag 8 ist höher angeordnet als die Ebene der Auflagestellen 7. Ein weiterer Anschlag 9 verbindet jene Schenkel von vorderem und hinterem Stützbügel 5, 6, die zu den Auflagestellen 7 führen. Der Anschlag 9 ist höher angeordnet als der Anschlag 8. Die Auflagestellen 7 dienen als Stellflächen für hochkant abzustellende Platten 13. Die Auflagestellen 7 sind horizontal oder zum Anschlag 8 leicht ansteigend angeordnet. Nahe der beiden Auflagestellen 7 führen der vordere und der hintere Stützbügel 5, 6 zuerst etwa senkrecht nach oben, sind dann abgewinkelt, um jeweils einen Knick 10 zu bilden und um ebenfalls die Auflagestellen 7 entweder aufzuweisen oder zu tragen. Die Knickabschnitte 11 und damit die Auflagestellen 7 liegen höher als die obere Begrenzung 12 oder die obere Ebene 12 des Fahrgestelles 2. Die unten gemessene lichte Weite A des hinteren Stützbügels 6 ist größer als die unten gemessene lichte Weite B des vorderen Stützbügels 5. Strichpunktiert ist eine hochkant abgestellte Platte 13 eingezeichnet, die auf den beiden Auflagestellen 7 ruht und am vorderen und am hinteren Stützbügel 5, 6 anliegt. Der Anschlag 8 verhindert, dass die Platte 13 mit ihrer Unterseite in der Zeichnung nach links rutschen kann.

Fig. 2 zeigt zwei platzsparend ineinandergeschobene, also gestapelte Transportwagen 1. Die Auflagestellen 7 sowie die Anschläge 8, 9 sind in einem spitzen Winkel α, also schräg verlaufend, zur Längsachse 14 der Transportwagen 1 angeordnet. Aus der Zeichnung ist ersichtlich, dass sich die im vorderen Bereich des Transportwagens 1 befindliche Auflagestelle 7 rechts der Längsachse 14 befindet und die im hinteren Bereich vorgesehene Auflagestelle 7 links von der Längsachse 14 des Transportwagens 1 angeordnet ist. Es ist klar, dass die Auflagestellen 7 auch spiegelbildlich zur eben beschriebenen Lage angeordnet sein können. Der vordere Stützbügel 5 des eingeschobenen Transportwagens 1 ist durch den hinteren Stützbügel 6 des vorausbefindlichen Transportwagens 1 hindurchgeschoben. Die trapezförmigen Fahrgestelle 2 sind in bekannter Weise ineinandergeschachtelt angeordnet.

## Patentansprüche

1. Stapelbarer Transportwagen (1) zum Transport von hochkant abzustellenden Platten (13), mit einem Fahrgestell (2), das einen trapezförmigen Grundriss aufweist, dessen längere hintere Seite fehlt, mit Auflagestellen (7) für die abzustellenden Platten (13) und mit Anschlägen (5, 6, 8, 9) um die Platten (13) in ihrer Position zu halten, wobei zumindest ein Teil der Anschläge durch einen im vorderen Bereich des Transportwagens (1) befindlichen vorderen Stützbügel (5) und durch einen im hinteren Bereich des Transportwagens (1) vorgesehenen hinteren Stützbügel (6) gebildet ist, wobei ferner der vordere Stützbügel (5) schmäler und niedriger gestaltet ist als der hintere Stützbügel (6) und wobei die Auflagestellen (7) und die ersten und zweiten Anschläge (8, 9) in einem spitzen Winkel zur Längsachse (14) des Transportwagens (1) angeordnet sind, **dadurch gekennzeichnet, dass** sich die Auflagestellen (7) rechts und links der Längsachse (14) befinden und dass beim platzsparenden Stapeln zweier Transportwagen (1) der vordere Stützbügel (5) des einzuschiebenden Transportwagens (1) durch den hinteren Stützbügel (6) des vorausbefindlichen Transportwagens (1) hindurchführbar ist.

2. Stapelbarer Transportwagen nach Anspruch 1, **dadurch gekennzeichnet, dass** die Auflagestellen (7) über der oberen Begrenzung (12) des Fahrgestelles (2) angeordnet sind.

3. Stapelbarer Transportwagen nach Anspruch 1 oder 2, **dadurch gekennzeichnet, dass** der hintere Stützbügel (6) die beiden hinteren freien Enden des Fahrgestelles (2) verbindet.

4. Stapelbarer Transportwagen nach einem der Ansprüche 1 bis 3, **dadurch gekennzeichnet, dass** zwischen den Auflagestellen (7) der erste Anschlag (8) vorgesehen ist, der höher angeordnet ist als die Auflagestellen (7).

5. Stapelbarer Transportwagen nach einem der Ansprüche 1 bis 4, **dadurch gekennzeichnet, dass** der vordere Stützbügel (5) und der hintere Stützbügel (6) durch den zweiten Anschlag (9) verbunden sind, der höher angeordnet ist als der erste Anschlag (8).

6. Stapelbarer Transportwagen nach einem der Ansprüche 1 bis 5, **dadurch gekennzeichnet, dass** der vordere Stützbügel (5) in einem seitlichen Abstand zur Längsachse (14) des Transportwagens (1) angeordnet ist.

7. Stapelbarer Transportwagen nach einem der Ansprüche 1 bis 7, **dadurch gekennzeichnet, dass** er vordere Stützbügel (5) und der hintere Stützbügel (6) eine auf den Kopf gestellte V-förmige Gestalt aufweisen.

8. Stapelbarer Transportwagen nach einem der Ansprüche 1 bis 7, **dadurch gekennzeichnet, dass** dem vorderen Stützbügel (5) und dem hinteren Stützbügel (6) jeweils eine Auflagestelle (7) zugeordnet ist,

## Claims

1. A nestable trolley (1) for the transportation of boards (13) to be placed on edge, comprising a wheel frame (2) with a trapezoidal contour, the longer rear end of which is missing, supporting points (7) for the boards (13) to be deposited, and stops (5, 6, 8, 9) for holding the boards (13) in position, wherein the stops are formed at least in part by a front supporting frame (5) provided in the front region of the trolley (1) and by a rear supporting frame (6) provided in the rear region of the trolley (1), wherein further the front supporting frame (5) is narrower and lower than the rear supporting frame (6), and wherein the supporting points (7) and the first and second stops (8, 9) are arranged at an acute angle to the longitudinal axis (14) of the trolley (1), **characterised in that** the supporting points (7) are located to the left and right of the longitudinal axis (14) and **in that**, when two trolleys (1) are nested in a space-saving manner, the front supporting frame (5) of the trolley (1) to be pushed in can be guided through the rear supporting frame (6) of the preceding trolley (1).

2. A nestable trolley according to claim 1, **characterised in that** the supporting points (7) are arranged above the upper boundary (12) of the wheel frame (2).

3. A nestable trolley according to claim 1 or 2, **characterised in that** the rear supporting frame (6) connects the two rear free ends of the wheel frame (2).

4. A nestable trolley according to any one of claims 1 to 3, **characterised in that** the first stop (8) is provided between the supporting points (7) and is arranged higher than the supporting points (7).

5. A nestable trolley according to any one of claims 1 to 4, **characterised in that** the front supporting frame (5) and the rear supporting frame (6) are connected by the second stop (9), which is arranged higher than the first stop (8).

6. A nestable trolley according to any one of claims 1 to 5, **characterised in that** the front supporting frame (5) is arranged laterally spaced apart from the longitudinal axis (14) of the trolley (1).

7. A nestable trolley according to any one of claims 1 to 7, **characterised in that** the front supporting frame (5) and the rear supporting frame (6) are in the shape of an inverted V.

8. A nestable trolley according to any one of claims 1 to 7, **characterised in that** the front supporting frame (5) and the rear supporting frame (6) are each associated with a supporting point (7).

## Revendications

1. Chariot de transport emboîtable (1) pour le transport de panneaux (13) posés sur chant, avec un châssis (2) qui présente en projection horizontale la forme d'un trapèze dont le grand côté arrière est manquant, avec des points ou endroits d'appui (7) pour les panneaux (13) à poser et avec des butées (5, 6, 8, 9) pour maintenir les panneaux (13) dans leur position, sachant qu'au moins une partie des butées est formée par un arceau de soutien avant (5) se trouvant dans la région avant du chariot de transport (1) et par un arceau de soutien arrière (6) prévu dans la région arrière du chariot de transport (1), sachant en outre que l'arceau de soutien avant (5) est réalisé plus étroit et plus bas que l'arceau de soutien arrière (6) et sachant que les points d'appui (7) et les première et deuxième butées (8, 9) sont disposés sous un angle aigu par rapport à l'axe longitudinal (14) du chariot de transport (1), **caractérisé en ce que** les points d'appui (7) se trouvent à droite et à gauche de l'axe longitudinal (14), et **en ce que**, lorsque deux chariots de transport (1) sont emboîtés d'une manière peu encombrante, l'arceau de soutien avant (5) du chariot de transport (1) à enfiler peut être dirigé à travers l'arceau de soutien arrière (6) du chariot de transport (1) se trouvant devant.

2. Chariot de transport emboîtable selon la revendication 1, **caractérisé en ce que** les points d'appui (7) sont disposés au-dessus de la délimitation supérieure (12) du châssis (2).

3. Chariot de transport emboîtable selon la revendication 1 ou 2, **caractérisé en ce que** l'arceau de soutien arrière (6) relie les deux extrémités arrière libres du châssis (2).

4. Chariot de transport emboîtable selon l'une des revendications 1 à 3, **caractérisé en ce que** la première butée (8), qui est disposée plus haut que les points d'appui (7), est prévue entre les points d'appui (7).

5. Chariot de transport emboîtable selon l'une des revendications 1 à 4, **caractérisé en ce que** l'arceau de soutien avant (5) et l'arceau de soutien arrière (6) sont reliés par la deuxième butée (9), qui est disposée plus haut que la première butée (8).

6. Chariot de transport emboîtable selon l'une des revendications 1 à 5, **caractérisé en ce que** l'arceau de soutien avant (5) est disposé à distance latérale de l'axe longitudinal (14) du chariot de transport (1).

7. Chariot de transport emboîtable selon l'une des revendications 1 à 6, **caractérisé en ce que** l'arceau de soutien avant (5) et l'arceau de soutien arrière (6) présentent une forme de V renversé.

8. Chariot de transport emboîtable selon l'une des revendications 1 à 7, **caractérisé en ce qu'**un point d'appui respectif (7) est associé à l'arceau de soutien avant (5) et à l'arceau de soutien arrière (6).
